# EUROPÄISCHE PATENTANMELDUNG

(11) **EP 4 530 955 A1**
(43) Veröffentlichungstag der Anmeldung: **02.04.2025**
(21) Anmeldenummer: 23199879.0
(22) Anmeldetag: 26.09.2023
(51) Int. Cl.: G06Q 20/14, G06Q 30/0601, G06F 9/451

(54) **VERFAHREN ZUM PERSONALISIEREN VON ZUMINDEST EINER COMPUTERGESTÜTZTEN ANWENDUNG MITTELS EINES PERSONALISIERUNGSSYSTEMS, COMPUTERPROGRAMMPRODUKT, COMPUTERLESBARES SPEICHERMEDIUM SOWIE PERSONALISIERUNGSSYSTEM**

(71) Anmelder: Siemens Aktiengesellschaft, 80333 München (DE)
(72) Erfinder: Johnson, Rebecca, 81739 München (DE); Singh, Saurabh Narayan, 81739 München (DE)
(74) Vertreter: Siemens Patent Attorneys

(57) **Zusammenfassung**

Die Erfindung betrifft ein Verfahren zum Personalisieren von zumindest einer computergestützten Anwendung (12) mittels eines Personalisierungssystems (10), mit den Schritten: Bereitstellen eines Initial-Personenprofils (24) für eine Person (18) mittels einer elektronischen Recheneinrichtung (14) des Personalisierungssystems (10); Erfassen einer individuellen Nutzung der computergestützten Anwendung (12) durch die Person (18) mittels der elektronischen Recheneinrichtung (14); Adaptieren des Initial-Personenprofils (24) in Abhängigkeit von der erfassten individuellen Nutzung zu einem personalisierten Personenprofil (26) mittels der elektronischen Recheneinrichtung (14); und Betreiben der computergestützten Anwendung (12) in Abhängigkeit von dem personalisierten Personenprofil (26) mittels der elektronischen Recheneinrichtung (14). Ferner betrifft die Erfindung ein Computerprogrammprodukt, ein computerlesbares Speichermedium sowie ein Personalisierungssystem (10).

## Beschreibung

Die Erfindung betrifft ein Verfahren zum Personalisieren von zumindest einer computergestützten Anwendung mittels eines Personalisierungssystems gemäß dem geltenden Patentanspruch 1. Ferner betrifft die Erfindung ein Computerprogrammprodukt, ein computerlesbares Speichermedium sowie ein Personalisierungssystem.

Die Personalisierung von Benutzererfahrung in Software-Anwendungen ist ein bereits bekanntes Konzept im Stand der Technik. Genauso bekannt ist die Idee von Empfehlungssystemen, die bestimmte Produkte oder Vorschläge empfehlen, oder von Suchergebnissen, die auf dem bisherigen Nutzerverhalten und der Interaktion basieren. Obwohl es das Konzept der personalisierten Persönlichkeitserfahrung gibt, war es bisher auf Vorschläge und spezifische Suchergebnisse beschränkt. Tatsache ist jedoch, dass verschiedene Benutzertypen ein und dasselbe Produkt unterschiedlich nutzen. Von einem Produktmanager wird erwartet, dass er ein Design-Tool auf eine bestimmte Art und Weise verwendet, während von einem User Experience-Designer erwartet wird, dass er es anders verwendet. Ein Software-Ingenieur nutzt ein Präsentationstool ganz anders als ein Berater. Diese Anforderung muss erst noch gelöst werden. Heutige Software wird für alle Benutzer entwickelt und ist für eine Einheitsgröße gedacht.

Insbesondere in der Perspektive des so genannten Metaverse, also in der virtuellen Welt, die insbesondere im Cyberspace existiert, wird dies zu einer noch größeren Herausforderung. Wenn man erwartet, dass ein Benutzer lange Stunden in immersiven Umgebungen verbringt, sollte es nicht überraschen, dass der Benutzer ein spezifisches Design und Muster erwartet, das seinen Bedürfnissen und Vorlieben entspricht. Ein technologisch fortgeschrittener Benutzer sollte in der Lage sein, die komplizierten Werkzeuge, die ihm zur Verfügung stehen, leicht zu bedienen, während ein unbedarfter Benutzer die Möglichkeit haben sollte, mit Leichtigkeit durch die Szene zu navigieren zu können und dabei ein vergleichbares Maß an Zufriedenheit zu erreichen. Kurz gesagt, da jeder Benutzer anders ist, sollte die Erfahrung mit immersiven Technologien auf jeden Benutzer zugeschnitten sein. Etwas so Einfaches wie beispielsweise ein Links- oder Rechtshänder, und wie das System von den Nutzern erlebt wird, kann den Unterschied zwischen der Akzeptanz der Anwendung durch den Endnutzer ausmachen.

Gemäß dem Stand der Technik gibt es hierbei zwei verwandte Möglichkeiten, dieses Problem zu lösen. Beispielsweise kann die Bereitstellung von Werbeempfehlungen auf der Grundlage des Nutzerverhaltens durchgeführt werden. Dies ist beispielsweise von Firmen für Social Media-Anwendungen eine verwendete Methode. Der Browserverlauf des Nutzers wird dabei verwendet, um ein Profil der Dinge zu erstellen, die dem Nutzer gefallen könnten, und diese werden ihm dann vorgeschlagen. Die Herausforderung besteht darin, dass dies gut für Werbe-, Such- und eventuell Filmempfehlungen funktioniert, sich aber nicht auf industrielle Anwendungen übertragen lässt.

Des Weiteren kann die Bereitstellung von vordefinierten Versionen von Anwendungen für verschiedene Benutzerprofile im Stand der Technik aufgefunden werden. Dies ist die derzeitige Art und Weise, industrielle und andere Software-Anwendungen zu entwerfen. Eine Benutzeranwendung und ihre Funktionen werden in verschiedenen Permutationen abgebildet. Diese Permutationen werden dann bestimmten Benutzerprofilen zugewiesen. Eine Designanwendung kann zum Beispiel unterschiedliche "Ansichten" haben, je nachdem, ob der Benutzer das Profil eines Produktmanagers, eines Designers oder eines Gutachters wählt. Die Herausforderung besteht natürlich darin, dass es weder einen getesteten Mechanismus gibt, der festlegt, welche Struktur und welche Funktionen zu welchem Profil gehören, noch eine dynamische Möglichkeit, diese Ansichten auf der Grundlage der Benutzerinteraktion zu aktualisieren. Zwei Designer könnten dasselbe Tool unterschiedlich nutzen, und die Anwendung sollte in der Lage sein, sich weiterzuentwickeln und eine personalisierte Erfahrung für jeden Benutzer zu schaffen, selbst innerhalb derselben Rolle. Das ist jedoch im Stand der Technik nicht möglich.

Aufgabe der vorliegenden Erfindung ist es, ein Verfahren, ein Computerprogrammprodukt, ein computerlesbares Speichermedium sowie ein Personalisierungssystem zu schaffen, mittels welchen eine computergestützte Anwendung personalisiert werden kann, wodurch insbesondere die Nutzererfahrung gesteigert werden kann.

Diese Aufgabe wird durch ein Verfahren, ein Computerprogrammprodukt, ein computerlesbares Speichermedium sowie ein Personalisierungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Personalisieren von zumindest einer computergestützten Anwendung mittels eines Personalisierungssystems. Es wird ein Initial-Personenprofil für eine Person mittels einer elektronischen Recheneinrichtung des Personalisierungssystems bereitgestellt. Es wird eine individuelle Nutzung der computergestützten Anwendung durch die Person mittels der elektronischen Recheneinrichtung erfasst. Es erfolgt das Adaptieren des Initial-Personenprofils in Abhängigkeit von der erfassten individuellen Nutzung zu einem personalisierten Personenprofil mittels der elektronischen Recheneinrichtung und das Betreiben der computergestützten Anwendung in Abhängigkeit von dem personalisierten Personenprofil mittels der elektronischen Recheneinrichtung.

Somit kann höchstpersonalisiert die computergestützte Anwendung bereitgestellt werden und entsprechend durch die Person betrieben werden. Dadurch können insbesondere eine Komfortsteigerung realisiert und insbesondere auch die Nutzerakzeptanz gesteigert werden.

Insbesondere schlägt somit die Erfindung eine sich entwickelnde User Experience-Design-Methode vor, die direkt mit dem Verhalten und der Persönlichkeit des Nutzers beziehungsweise Person zusammenhängt und der Person ein personalisiertes Erlebnis bietet. Personalisiert aus der Perspektive der Nutzung der Anwendung, und nicht beispielsweise bezüglich von Werbung und Vorschläge, die heute bereits bekannt sind.

Insbesondere ermöglicht somit die Erfindung ein automatisiertes, sich selbst entwickelndes Design der Anwendung auf der Grundlage des Nutzerverhaltens. Das Nutzerverhalten des Nutzers beziehungsweise der Person wird beachtet und jeder Person wird ein personalisiertes Erlebnis geboten. Selbst innerhalb ein und derselben Rolle können verschiedene Personen beziehungsweise Nutzer unterschiedliche, auf ihre Bedürfnisse zugeschnittene Erfahrungen machen. Hierzu kann zusätzlich vorgesehen sein, dass beispielsweise auch neue Geschäftsmodelle auf der Grundlage von personalisierter Nutzungsüberwachung und -Vorschlägen ermöglicht werden.

Insbesondere kombiniert somit die Erfindung die Analyse des Nutzerverhaltens, ein datengesteuertes Design und beispielsweise künstliche Intelligenz, um ein sich entwickelndes, nutzerspezifisches Erlebnis insbesondere im so genannten Metaverse zu schaffen. Zusätzlich kann ein anfängliches Nutzerprofil eingefügt werden, um das anfängliche personalisierte Erlebnis zu schaffen. Unter dem Metaverse ist insbesondere eine virtuelle Welt, die im Cyberspace existiert, zu verstehen. Es handelt sich dabei um eine Simulation der physischen Welt, in der Menschen beispielsweise mit Hilfe von Avataren miteinander und mit ihrer Umgebung interagieren können. Insbesondere kann somit ein digitaler Raum durch das Zusammenwirken virtueller, erweiterter und physischer Realität bereitgestellt werden. Hauptaspekt ist dabei die verschiedenen Handlungsräume, beispielsweise des Internets, zu einer Wirklichkeit zu vereinigen.

Beispielsweise kann vorgesehen sein, dass auf Basis einer Statistik bezüglich der Nutzung wiederum die Adaption durchgeführt wird. Hierbei kann beispielsweise vorgesehen sein, dass ein Verhalten eines Nutzers, welcher eine vergrößerte Schriftgröße verwendet, da dieser beispielsweise kurzsichtig ist, erfasst wird und auch bei zukünftigen Anwendungen immer bereitgestellt wird. Ferner können beispielsweise auch bevorzugte Farben von dem Nutzer erfasst werden und entsprechend eine Adaption durchgeführt werden, so dass zukünftig bei der computergestützten Anwendung die bevorzugten Farben verwendet werden.

Das Personalisierungssystem beziehungsweise die elektronische Recheneinrichtung kann zusätzlich beispielsweise eine Erfassungseinrichtung, insbesondere in Form einer Eingabeeinrichtung, aufweisen, um das entsprechende Nutzerverhalten zu erfassen. Hierzu können beispielsweise entsprechende Tastaturen, Mäuse, Kameras beziehungsweise Touchscreens verwendet werden, um ein entsprechendes Nutzerverhalten zu erfassen. Ferner weist das Personalisierungssystem insbesondere eine entsprechende Speichereinrichtung auf, um die entsprechenden Nutzerverhalten und Profile entsprechend speichern zu können.

Gemäß einer vorteilhaften Ausgestaltungsform wird in Abhängigkeit von einer Identifizierung der Person das Initial-Personenprofil bereitgestellt. Hierbei kann beispielsweise eine optische Erfassungseinrichtung an der elektronischen Recheneinrichtung dazu dienen, eine entsprechende Identifizierung durchzuführen. Ferner kann auch beispielsweise über entsprechende ID-Karten eine Identifizierung durchgeführt werden. Die Identifizierung umfasst dabei beispielsweise auch eine entsprechende Rollenzuweisung, so dass zuverlässig auch bereits das Initial-Personenprofil bereitgestellt werden kann. Auf Basis der Identifizierung kann dann sowohl das Initial-Personenprofil bereitgestellt werden, als auch, sollte beispielsweise bereits ein personalisiertes Personenprofil vorliegen, dieses entsprechend abgerufen werden, wodurch insbesondere bereits automatisiert nach der Identifizierung das persönliche Personenprofil bereitgestellt werden kann.

Es hat sich weiterhin als vorteilhaft erwiesen, wenn das personalisierte Personenprofil zentral abgespeichert wird und für eine Vielzahl von computergestützten Anwendungen bereitgestellt wird, wobei eine jeweilige Anwendung in Abhängigkeit von dem personalisierten Personenprofil adaptiert wird. Insbesondere kann somit die elektronische Recheneinrichtung zentral das Personenprofil abspeichern und, je nachdem, welche Anwendung von der Person abgefragt wird, das Personenprofil abrufen und die entsprechende computergestützte Anwendung personalisieren. Somit ist es ermöglicht, dass höchstkomfortabel für die Person eine Vielzahl von computergestützten Anwendungen personalisiert werden können.

Es hat sich weiterhin als vorteilhaft erwiesen, wenn das Initial-Personenprofil in Abhängigkeit von einer Zugänglichkeit bezüglich der computergestützten Anwendung und/oder einer Rolle der Person und/oder eines technischen Wissens der Person und/oder eines vorgegebenen Ziels der Person bereitgestellt wird. Insbesondere basiert somit das Initial-Personenprofil auf anderen Informationen über die Zugänglichkeit, beispielsweise ob der Nutzer beziehungsweise die Person bestimmte Einschränkungen hat, wenn es um die Nutzung der Anwendung geht. Ferner kann auch ein technisches Können berücksichtigt werden, beispielsweise wie geübt die Person im Umgang mit dieser speziellen Technologie ist. Dazu gehört beispielsweise auch, ob der Nutzer eine entsprechende Basis-Technologie, beispielsweise Augmented Reality, Virtual Reality beziehungsweise Extended Reality, bereits verwendet hat und ob er eine ähnliche Anwendung, beispielsweise in diesem Fall ein Design-Tool, bereits verwendet hat. Des Weiteren wird die Rolle des Nutzers berücksichtigt, genauso wie welche Funktionen der Nutzer bereits am meisten nutzt. Ferner wird auch das Endziel des Nutzers beziehungsweise der Person berücksichtigt. Somit kann höchstindividuell bereits das Initial-Personenprofil bereitgestellt werden.

Eine weitere vorteilhafte Ausgestaltungsform sieht vor, dass zusätzlich eine Eingabe der Person bezüglich einer Anpassung der computergestützten Anwendung erfasst wird und in Abhängigkeit von der Eingabe das persönliche Personenprofil adaptiert wird. Insbesondere kann somit neben dem reinen Verhalten auch eine zusätzliche Eingabe des Nutzers direkt erfolgen, welche Vorlieben dieser beispielsweise hat. Somit kann eine direkte Einstellung der Person auch schnell durchgeführt werden, ohne dabei das Nutzerverhalten erlernen zu müssen. Somit kann höchstindividuell die computergestützte Anwendung betrieben werden.

Weiterhin vorteilhaft ist, wenn zeitlich vor der Adaption der computergestützten Anwendung der Person ein Adaptionsvorschlag unterbreitet wird. Insbesondere kann somit der Adaptionsvorschlag erst der Person angezeigt werden, und diese kann bestätigen, ob sie eine entsprechende Adaption wünscht. Alternativ kann die Adaption auch automatisiert durchgeführt werden.

Es hat sich weiterhin als vorteilhaft erwiesen, wenn in Abhängigkeit von dem personalisierten Personenprofil zumindest ein Anwendungsmodul der computergestützten Anwendung angezeigt und/oder unterdrückt wird. Beispielsweise kann die computergestützte Anwendung mehrere Anwendungsmodule aufweisen. Diese Anwendungsmodule sind somit insbesondere modular beziehungsweise "steckbar". Mit anderen Worten weist die computergestützte Anwendung unterschiedliche Module auf, welche je nach Nutzung eingeblendet beziehungsweise versteckt werden können. Somit wird nicht ein ganzheitliches Programm der Person vorgeschlagen, sondern lediglich entsprechende Module, um beispielsweise die Übersichtlichkeit und somit auch den Komfort zu steigern.

Ebenfalls vorteilhaft ist, wenn eine inkrementelle Adaption der computergestützten Anwendung durchgeführt wird und nach einer jeweiligen inkrementellen Adaption erneut individuell die Nutzung erfasst wird. Insbesondere kann somit vorgesehen sein, dass lediglich in kleineren Schritten eine Adaption durchgeführt wird. Es kann beispielsweise zuerst ein erster Funktionsblock/Anwendungsmodul der computergestützten Anwendung hinzugefügt beziehungsweise entfernt werden. Es wird dann das Nutzerverhalten erneut mit dieser Änderung erfasst. In einem nachgelagerten Schritt kann dann wiederum in Abhängigkeit von dem Nutzerverhalten eine weitere inkrementelle Anpassung durchgeführt werden. Somit kann in kleinen Schritten und somit höchstindividuell eine entsprechende Adaption der computergestützten Anwendung realisiert werden.

Ferner hat es sich als vorteilhaft erwiesen, wenn die Nutzung innerhalb der computergestützten Anwendung auf Basis einer Häufigkeit der Nutzung und/oder auf Basis einer Nutzungsdauer erfasst wird. Insbesondere kann somit erfasst werden, welche Funktionen innerhalb der computergestützten Anwendung am meisten genutzt werden, welche Funktionen die entsprechenden meisten "Klicks" haben sowie welche Funktionen den längsten Weg oder dergleichen aufweisen. Insbesondere können somit im Metaverse kürzere Wege, insbesondere "Abkürzungen" angeboten werden. Somit kann eine zuverlässige Auswertung der Nutzung durchgeführt werden und im Anschluss daran eine zuverlässige Adaption der computergestützten Anwendung durchgeführt werden.

Ferner hat es sich als vorteilhaft erwiesen, wenn die computergestützte Anwendung auf Micro-Services beruhend bereitgestellt wird. Insbesondere ist dies notwendig, damit die entsprechende computergestützte Anwendung personalisiert werden kann. Insbesondere ist dies nur möglich, wenn die einzelnen Funktionen entsprechend modular und steckbar sind. Um dies zu ermöglichen, ist die computergestützte Anwendung insbesondere auf Micro-Service-basierten Backends oder Micro-User Interface-Inhalten basierend. Dabei ist jede Komponente innerhalb dieser Anwendung somit quasi unabhängig und kann verschoben werden, ohne andere Komponenten oder die Gesamtanwendung zu beeinträchtigen.

Ferner hat es sich als vorteilhaft erwiesen, wenn mittels einer künstlichen Intelligenz der elektronischen Recheneinrichtung die Adaption durchgeführt werden. Dabei kann die künstliche Intelligenz beispielsweise in Form eines neuronalen Netzwerks bereitgestellt werden. Dadurch ist es ermöglicht, dass die elektronische Recheneinrichtung über die Zeit hinweg das Nutzerverhalten zuverlässig lernen kann und somit eine entsprechende Adaption, insbesondere kontinuierlich, durchführen kann.

Gemäß einer weiteren vorteilhaften Ausgestaltungsform wird die computergestützte Anwendung zumindest teilweise auf einer erweiterten Realität basierend bereitgestellt. Insbesondere ist unter der so genannten erweiterten Realität (XR - Extended Reality) die Verwendung von beispielsweise virtueller Realität (VR - Virtual Reality) oder auch augmentierter Realität (AR - Augmented Reality) zu verstehen. Insbesondere bei solchen Anwendungen ist es erforderlich, dass die Nutzererfahrung gesteigert werden kann, um die entsprechende Anwendung bei der Person akzeptabel zu machen.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung daher auch ein computerlesbares Speichermedium mit dem Computerprogrammprodukt.

Ein weiterer Aspekt der Erfindung betrifft ein Personalisierungssystem zum Personalisieren von zumindest einer computergestützten Anwendung, mit zumindest einer elektronischen Recheneinrichtung, wobei das Personalisierungssystem zum Durchführen eines Verfahrens nach dem vorhergehenden Aspekt ausgebildet ist. Insbesondere wird das Verfahren mittels des Personalisierungssystems durchgeführt.

Vorteilhafte Ausgestaltungsformen des Verfahrens sind als vorteilhafte Ausgestaltungsformen des Computerprogrammprodukts, des computerlesbaren Speichermediums sowie des Personalisierungssystems anzusehen. Das Personalisierungssystem weist hierzu insbesondere gegenständliche Merkmale auf, um entsprechende Verfahrensschritte durchführen zu können.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: ein schematisches Blockschaltbild gemäß einer Ausführungsform eines Personalisierungssystems; und
- FIG 2: ein schematisches Ablaufdiagramm gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

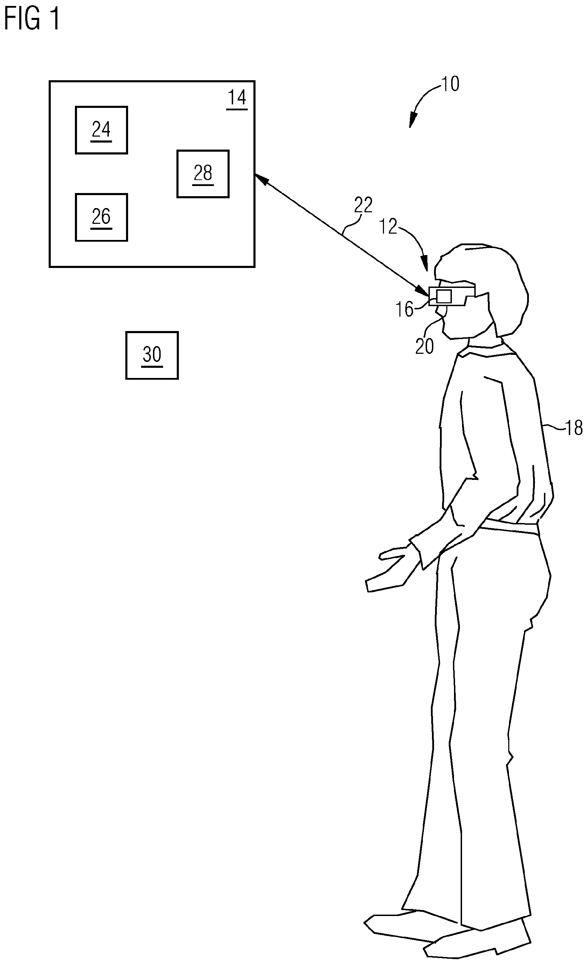

FIG 1 zeigt ein schematisches Blockschaltbild gemäß einer Ausführungsform eines Personalisierungssystems 10. Das Personalisierungssystem 10 ist zum Personalisieren von zumindest einer computergestützten Anwendung 12 ausgebildet und weist hierzu zumindest eine elektronische Recheneinrichtung 14 auf. Ferner kann beispielsweise das Personalisierungssystem 10 eine Erfassungseinrichtung 16 aufweisen, wobei mittels der Erfassungseinrichtung 16 insbesondere die Nutzung der computergestützten Anwendung 12 erfasst werden kann.

Im vorliegenden Ausführungsbeispiel trägt eine Person 18 eine virtuelle Realitätsbrille 20, auf welcher insbesondere die computergestützte Anwendung 12 läuft. Die virtuelle Realitätsbrille 20 kann wiederum die Erfassungseinrichtung 16 aufweisen und das entsprechende Nutzerverhalten erfassen. Ferner kann die virtuelle Realitätsbrille 20 auch als Ausgabeeinrichtung betrachtet werden, auf welcher wiederum die computergestützte Anwendung 12 entsprechend ausgegeben werden kann. Die computergestützte Anwendung 12 kann beispielsweise über ein Netzwerk 22 entsprechend mit der elektronischen Recheneinrichtung 14 kommunizieren. Auf der elektronischen Recheneinrichtung 14 ist wiederum ein Initial-Personenprofil 24 abgespeichert sowie ein personalisiertes Personenprofil 26 abgespeichert sein kann. Ferner weist die elektronische Recheneinrichtung 14 insbesondere eine künstliche Intelligenz 28 auf.

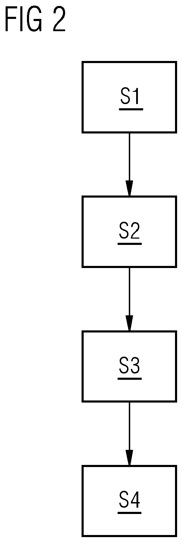

FIG 2 zeigt ein schematisches Ablaufdiagramm gemäß einer Ausführungsform des Verfahrens. Insbesondere ist das Verfahren zum Personalisieren der zumindest einen computergestützten Anwendung 12 mittels des Personalisierungssystems 10 ausgebildet. Hierzu wird in einem ersten Schritt S1 das Initial-Personenprofil 24 für die Person 18 mittels der elektronischen Recheneinrichtung 14 bereitgestellt. Es erfolgt in einem zweiten Schritt S2 das Erfassen der individuellen Nutzung der computergestützten Anwendung 12 durch die Person 18 mittels der elektronischen Recheneinrichtung 14. In einem dritten Schritt S3 wird das Initial-Personenprofil 24 in Abhängigkeit von der erfassten individuellen Nutzung zu einem personalisierten Personenprofil 26 mittels der elektronischen Recheneinrichtung 14 adaptiert. Es erfolgt dann in einem vierten Schritt S4 wiederum das Betreiben der computergestützten Anwendung 12 in Abhängigkeit von dem personalisierten Personenprofil 26 mittels der elektronischen Recheneinrichtung 14.

Insbesondere kann vorgesehen sein, dass in Abhängigkeit von der Identifizierung der Person 18 das Initial-Personenprofil 24 bereitgestellt wird. Hierzu kann beispielsweise das Personalisierungssystem 10 zusätzlich über eine Identifizierungseinrichtung 30, beispielsweise in Form einer Kamera oder eines Kartenlesegeräts, aufweisen, um eine Identifizierung vorzunehmen.

Ebenfalls kann vorgesehen sein, dass das personalisierte Personenprofil 26 zentral abgespeichert wird und für eine Vielzahl von computergestützten Anwendungen 12 bereitgestellt wird, wobei die jeweilige Anwendung computergestützter Anwendungen 12 in Abhängigkeit von dem personalisierten Personenprofil 26 adaptiert wird.

Weiter kann vorgesehen sein, das Initial-Personenprofil 24 in Abhängigkeit von einer Zugänglichkeit bezüglich der computergestützten Anwendung 12 und/oder eine Rolle der Person 18 und/oder eines technischen Wissens der Person 18 und/oder eines vorgegebenen Ziels der Person 18 bereitgestellt wird.

Ferner kann vorgesehen sein, dass zusätzlich eine Eingabe der Person 18 bezüglich einer Anpassung der computergestützten Anwendung 12 erfasst wird und in Abhängigkeit von der Eingabe das persönliche Personenprofil 26 adaptiert wird.

Ebenfalls kann vorgesehen sein, dass zeitlich vor einer Adaption der computergestützten Anwendung 12 der Person 18 ein Adaptionsvorschlag unterbreitet wird.

Ebenfalls kann vorgesehen sein, dass in Abhängigkeit von dem personalisierten Personenprofil 26 zumindest ein Anwendungsmodul der computergestützten Anwendung 12 angezeigt und/oder unterdrückt wird. Ferner kann vorgesehen sein, dass eine inkrementelle Adaption der computergestützten Anwendung 12 durchgeführt wird und nach einer jeweiligen inkrementellen Adaption erneut die individuelle Nutzung erfasst wird. Dabei kann insbesondere ebenfalls vorgesehen sein, dass die Nutzung innerhalb der computergestützten Anwendung 12 auf Basis einer Häufigkeit der Nutzung und/oder auf Basis einer Nutzungsdauer erfasst wird.

Ebenfalls kann vorgesehen sein, dass die computergestützte Anwendung 12 auf Micro-Services beruhend bereitgestellt wird. Des Weiteren kann hierbei vorgesehen sein, dass insbesondere mittels der künstlichen Intelligenz 28 der elektronischen Recheneinrichtung 14 die Adaption durchgeführt wird. Ferner kann vorgesehen sein, dass die computergestützte Anwendung 12 zumindest teilweise auf einer erweiterten Realität basierend bereitgestellt wird.

Insbesondere zeigen somit die FIG, dass die Analyse des Nutzerverhaltens, ein datengesteuertes Design und die künstliche Intelligenz 28 entsprechend kombiniert werden, um ein sich entwickelndes, nutzerspezifisches Erlebnis insbesondere im so genannten Metaverse zu schaffen. Zusätzlich kann ein anfängliches Initial-Personenprofil 24 eingefügt werden, um das anfängliche personalisierte Erlebnis zu schaffen.

Das Initial-Personenprofil 24 ist das Profil, das zu Beginn der Nutzung in die computergestützte Anwendung 12 eingefügt wird. Dies kann von etwas so Einfachem wie die Rolle, Rechtshänder oder Linkshänder, technisches Fachwissen und Vertrautheit mit der Technologie bis hin zu einem komplexen Benutzerprofil mit Persönlichkeitsmerkmalen reichen. Ein entsprechendes Modul sammelt die Informationen über die Interaktion der Person 18 mit der computergestützten Anwendung 12. Insbesondere welche Funktionen am meisten genutzt werden, welche Funktionen die meisten "Klicks" aufweisen, sowie welche Funktionen den längsten Weg haben werden dabei erfasst. Ein Analysemodul läuft auf der elektronischen Recheneinrichtung 14, welches insbesondere auf Basis der gesammelten Daten die Analyse durchführt. Das Analysemodul liefert die Erkenntnisse, mit denen die computergestützte Anwendung 12 dann entsprechend personalisiert werden kann.

Ein sehr wichtiger Aspekt, um die computergestützte Anwendung 12 personalisieren zu können, ist, dass es technisch machbar ist, die computergestützte Anwendung 12 auch zu personalisieren. Dies ist nur möglich, wenn die einzelnen Funktionen modular und steckbar sind. Um dies zu ermöglichen, kann die computergestützte Anwendung 12 über eine entsprechende modulare Anwendungsarchitektur verfügen, was beispielsweise ein Micro-Service-basiertes Backend und ein Micro-User Interface beinhaltet. Dabei kann somit jede Komponente innerhalb der computergestützten Anwendung 12 unabhängig betrieben werden und verschoben werden, ohne andere Komponenten oder die Gesamtanwendung zu beeinträchtigen.

Ein entsprechender automatisierter Design- und Modulkonfigurator ist in erster Linie für die Anpassung des Designs der computergestützten Anwendung 12 verantwortlich, wobei dies insbesondere an die Bedürfnisse des einzelnen Benutzers beziehungsweise der Person 18 angepasst wird.

Insbesondere schlägt somit die Erfindung vor, dass jede Komponente innerhalb der computergestützten Anwendung 12 ein Microdienst mit einer Micro-Benutzeroberfläche und einen unabhängigem Backend ist. Die Komponenten werden mit Hilfe von insbesondere so genannten Glue-Codes zusammengefügt, um die Gesamtanwendung zu erstellen. Die Positionierung dieser Werkzeuge/Komponenten zum Zeitpunkt des Starts der Anwendung basiert dabei wiederum auf dem Initial-Personenprofil 24. Wenn ein Benutzer die computergestützte Anwendung 12 zum ersten Mal startet, wird sein eindeutiges Benutzerprofil erstellt. Dies basiert auf anfänglichen Informationen über die Zugänglichkeit, insbesondere ob die Person 18 bestimmte Einschränkungen hat, wenn es um die Nutzung der computergestützten Anwendung 12 geht. Des Weiteren wird das technische Können bereitgestellt, insbesondere im Umgang mit der entsprechenden Technologie. Ferner wird die Rolle der Person 18, sowie welche Funktionen die Person 18 am meisten nutzen möchte, genauso wie das Endziel der Person 18 berücksichtigt.

Darüber hinaus kann die Person 18 auch ihre Persönlichkeit mit entsprechenden Eingaben einfügen und/oder ihr eigenes Personenprofil einbringen. Sobald die computergestützte Anwendung 12 gestartet wird, beginnt die Person 18 mit der Nutzung der computergestützten Anwendung 12 und es werden die entsprechenden Daten zur Benutzerinteraktion gesammelt. Sobald aussagekräftige Daten gesammelt werden, kann dem Nutzer beziehungsweise die Person 18 eine Designänderung sowie Erfahrungsregeln vorgeschlagen werden. Diese Vorschläge werden wiederum an die elektronische Recheneinrichtung 14 weitergeleitet. Die elektronische Recheneinrichtung 14 ordnet die Module in der Benutzeroberfläche neu an und blendet bestimmte Komponenten auf der Grundlage der entsprechenden Empfehlung ein oder aus. Die adaptierte computergestützte Anmeldung 12 kann dabei insbesondere der Person 18 inkrementell präsentiert werden. Die elektronische Recheneinrichtung 14 sammelt weiterhin Daten, um zu überprüfen, ob sich die Nutzererfahrung und die Benutzerfreundlichkeit für die Person 18 verbessert hat oder nicht. Der Zyklus wird dabei insbesondere kontinuierlich wiederholt, um der Person 18 eine optimierte Nutzererfahrung zu bieten.

In einer anderen Ausführungsform können neue Funktionen auch selektiv für die Person 18 auf der Grundlage des Profils bereitgestellt werden. Es kann vorhergesagt werden, ob die Person 18 eine Funktion wichtig findet oder nicht, und es kann eine selektive Freigabe erfolgen. Darüber hinaus kann auch beispielsweise ein Geschäftsmodell einer Anwendung auf der Grundlage der Empfehlung geändert werden. Wenn zum Beispiel die Person 18 nur eine Teilmenge der computergestützten Anwendung 12 nutzt, so sollte die Person 18 der gesamten computergestützten Anwendung 12 nicht für die Gesamtnutzung bezahlen müssen. Auf der Grundlage dieser Methodik kann somit eine Teilmenge leichter identifiziert werden, und der Person 18 kann eine selektive Preisgestaltung auf der Grundlage der Nutzung bereitgestellt werden.

*Unabhängig vom grammatikalischen Geschlecht eines bestimmten Begriffes sind Personen mit männlicher, weiblicher oder anderer Geschlechteridentität mit umfasst.*

### Bezugszeichenliste

- 10: Personalisierungssystem
- 12: computergestützte Anwendung
- 14: elektronische Recheneinrichtung
- 16: Erfassungseinrichtung
- 18: Person
- 20: virtuelle Realitätsbrille
- 22: Netzwerk
- 24: Initial-Personenprofil
- 26: personalisiertes Personenprofil
- 28: künstliche Intelligenz
- 30: Identifizierungseinrichtung
- S1 bis S4: Schritte des Verfahrens

## Patentansprüche

1. Verfahren zum Personalisieren von zumindest einer computergestützten Anwendung (12) mittels eines Personalisierungssystems (10), mit den Schritten:
- Bereitstellen eines Initial-Personenprofils (24) für eine Person (18) mittels einer elektronischen Recheneinrichtung (14) des Personalisierungssystems (10);
- Erfassen einer individuellen Nutzung der computergestützten Anwendung (12) durch die Person (18) mittels der elektronischen Recheneinrichtung (14);
- Adaptieren des Initial-Personenprofils (24) in Abhängigkeit von der erfassten individuellen Nutzung zu einem personalisierten Personenprofil (26) mittels der elektronischen Recheneinrichtung (14); und
- Betreiben der computergestützten Anwendung (12) in Abhängigkeit von dem personalisierten Personenprofil (26) mittels der elektronischen Recheneinrichtung (14).

2. Verfahren nach Anspruch 1, **dadurch gekennzeichnet, dass** in Abhängigkeit von einer Identifizierung der Person (18) das Initial-Personenprofil (24) bereitgestellt wird.

3. Verfahren nach Anspruch 1 oder 2, **dadurch gekennzeichnet, dass**
das personalisierte Personenprofil (26) zentral abgespeichert wird und für eine Vielzahl von computergestützten Anwendungen (12) bereitgestellt wird, wobei eine jeweilige computergestützte Anwendung (12) in Abhängigkeit von dem personalisierten Personenprofil (26) adaptiert wird.

4. Verfahren nach einem der vorhergehenden Ansprüche, **dadurch gekennzeichnet, dass**
das Initial-Personenprofil (24) in Abhängigkeit von einer Zugänglichkeit bezüglich der computergestützten Anwendung (12) und/oder einer Rolle der Person (18) und/oder eines technischen Wissens der Person (18) und/oder eines vorgegebenen Ziels der Person (18) bereitgestellt wird.

5. Verfahren nach einem der vorhergehenden Ansprüche, **dadurch gekennzeichnet, dass**
zusätzlich eine Eingabe der Person (18) bezüglich einer Anpassung der computergestützten Anwendung (12) erfasst wird und in Abhängigkeit von der Eingabe das persönliche Personenprofil (26) adaptiert wird.

6. Verfahren nach einem der vorhergehenden Ansprüche, **dadurch gekennzeichnet, dass**
zeitlich vor einer Adaption der computergestützten Anwendung (12) der Person (18) ein Adaptionsvorschlag unterbreitet wird.

7. Verfahren nach einem der vorhergehenden Ansprüche, **dadurch gekennzeichnet, dass**
in Abhängigkeit von dem personalisierten Personenprofil (26) zumindest ein Anwendungsmodul der computergestützten Anwendung (12) angezeigt oder unterdrückt wird.

8. Verfahren nach einem der vorhergehenden Ansprüche, **dadurch gekennzeichnet, dass**
eine inkrementelle Adaption der computergestützten Anwendung (12) durchgeführt wird und nach einer jeweiligen inkrementellen Adaption erneut die individuelle Nutzung erfasst wird.

9. Verfahren nach einem der vorhergehenden Ansprüche, **dadurch gekennzeichnet, dass**
die Nutzung innerhalb der computergestützten Anwendung (12) auf Basis einer Häufigkeit der Nutzung und/oder auf Basis einer Nutzungsdauer erfasst wird.

10. Verfahren nach einem der vorhergehenden Ansprüche, **dadurch gekennzeichnet, dass**
die computergestützte Anwendung (12) auf Mikro-Services beruhend bereitgestellt wird.

11. Verfahren nach einem der vorhergehenden Ansprüche, **dadurch gekennzeichnet, dass**
mittels einer künstlichen Intelligenz (28) der elektronischen Recheneinrichtung (14) die Adaption durchgeführt wird.

12. Verfahren nach einem der vorhergehenden Ansprüche, **dadurch gekennzeichnet, dass**
die computergestützte Anwendung (12) zumindest teilweise auf einer erweiterten Realität basierende bereitgestellt wird.

13. Computerprogrammprodukt mit Programmcodemitteln, welche eine elektronische Recheneinrichtung (14) dazu veranlassen, wenn die Programmcodemittel von der elektronischen Recheneinrichtung (14) abgearbeitet werden, ein Verfahren nach einem der vorhergehenden Ansprüche durchzuführen.

14. Computerlesbares Speichermedium mit einem Computerprogrammprodukt nach Anspruch 13.

15. Personalisierungssystem (10) zum Personalisieren von zumindest einer computergestützten Anwendung (12), mit zumindest einer elektronischen Recheneinrichtung (14), wobei das Personalisierungssystem (10) zum Durchführen eines Verfahrens nach einem der Ansprüche 1 bis 12 ausgebildet ist.
